Europäisches Patentamt

**European Patent Office**  (11) Publication number: **0 149 437**

**Office européen des brevets**  **A2**

(19)

(12) **EUROPEAN PATENT APPLICATION**

(21) Application number: **84830352.5**

(22) Date of filing: **20.12.84**

(51) Int. Cl.⁴: **E 06 B 1/10**
**E 06 B 1/60**

(30) Priority: **22.12.83 ES 276516**

(43) Date of publication of application:
**24.07.85 Bulletin 85/30**

(84) Designated Contracting States:
**AT BE CH FR GB IT LI LU NL SE**

(71) Applicant: **Hernandez, Jimenez Juan Carlos**
**Prado Sancho 52**
**05005 Avila(ES)**

(72) Inventor: **Hernandez, Jimenez Juan Carlos**
**Prado Sancho 52**
**05005 Avila(ES)**

(74) Representative: **La Ciura, Salvatore**
**Via Francesco Sforza 5**
**I-20122 Milano(IT)**

(54) **Device for fixing door, window and similar frames.**

(57) Device for fixing door, window and similar frames,
designed for the direct installation of doors and/or windows
on to a pre-frame placed on the masonry of the correspond-
ing opening, consisting of three basic pieces, one of which
constitutes the frame itself, the other constitutes a sliding
piece between the inner side of the said frame and the outer
side of the pre-frame, whereas the third consists of a screw
associated with a bush fitted by means of a thread in the
sliding piece, being retained between the latter and the
frame, in such a way that the screw passing through the bush
screws into the pre-frame in order to effect the fixing of the
frame and regulate the greater or lesser separation desired
between the frame and the pre-frame.

EP 0 149 437 A2

- 1 -

## Device for fixing door, window and similar frames

This invention refers to a device for fixing door, window and similar frames, making it possible to instal these items fully finished in masonry.

The fitting of woodwork in masonry has always entailed a number of drawbacks which have bindered the indusdria lization and rationalization of this, as regards the fitting in masonry of fully finished doors, windows, etc.

The mass production of doors, frames and mouldings is clear, although the fitting and vernishing is not carried out in the factory owing to the drawbacks which arise when it comes to fitting them in masonry. This means that the finishing must be carried out at the same time as the installation in masonry, as there are two main problems which make this advisable. One of them consists of the variation of the plumblines of the pre-frames, making it necessary to insert wedges, key, plane and fit the leaves, and the second major problem lies in the variation in thickness of the partition walls, and adjustments must

- 2 -                    0149437

also be made to fit the respective thickness of the parti
tion wall in which the door, window, etc. is to be fitted.

These problems and drawbacks hinder or limit to a great
extent the taking of finished woodwork to the site, i.e.
vernished and with the fittings and jambs finished and
in place, as the pieces have to be moved too much from
one place to another; they have to be planed; the leaves
have to be fitted, etc.and doubtless these operations,
which are inevitable because of.the problems we have
mentioned, damage the woodwork and for this reason it
is inadvisable to send it finished and varnished.

The device of the invention solves these problems, as it:
1. Makes it possible to correct any defect of plumb,
warping and twisting of the pre-frame with-door hinged
and jung.

2. The frame is adjustable to any thickness of partition
wall, whatever the measurement or variation.

All this without the need to plane, measure or fit,
consequently making it possible to take that step, which
is so necessary in the sector, which is, "the industria
lization of fitting". With the frame of the invention
all the woodwork comes with the fittings in place, doors
hung and fitted, frames erected, the jambs in place on
both sides and all this varnished, all these operations
being carried out in the factory where they can be
machined and infinitely better finishes may be achieved at much lower cost. Also the building times are conside
rabli reduced, as the quality of the fitting and woodwork
does not depend on how good or bad the skilled man is,
as the fitting is so simple that anyone can do it correctly.

As for the structure itself of the device of the inven
tion, it consists of three basic parts, one of them making
up the frame with the outer jamb is fixed and glued
along the whole length. Another part is called the slide,
to which the inner jamb is fixed and the third part is
a screw-bushing which linds the frame and slide by itself,
and at the same time the screw end screws into the
pre-frame in order to thus fix the whole assembly and
regulate the greater or lesser separation desired between
the frame and pre-frame.

In order to facilitate a better understanding of the
characteristics of the invention, a detailed description
will be made on the basis of a sheet of drawings attached
to this description, which forms an integral part of it,
and in which merely for guidance and not intended to
limit in any way, a detailed sectional view has been
shown of the fixing device applied to a door, and the
link of the respective parts of the pre-frame fitted
in the masonry on the corresponding partition wall.

It can be seen in the above mentioned figures that the
fixing device which is the object of the invention
consists of a frame (1), a sliding piece (2) and a screw
(3).

The frame (1) has the outer jamb (4) glued and fixed along the whole of its length, while the inner jamb (5) is fixed to the sliding piece (2)., the latter presenting a rectangular corss section and placed on the inside face of the frame (1), between the latter and the pre(frame (6) of masonry which is fitted to the corresponding partition wall (7).

The sliding piece (2) may be moved across the width of the frame (1) at the back side of the latter. Its configu ration is that of an "L" in its union with the inner jamb (5), so that when the frame (1) is closed, which in turn describes an "L" with its jamb (4), both pieces (1) and (2) close the partition wall (7), clasping it and fitting to it.

The link between the frame (1) and the sliding piece (2) is effected by means of the screw (3), which locks the movement of both pieces when they are fitted to the thic kness of the wall (7). In turn, the end of this screw (3) screws into the pre-frame (6) thus anchoring the frame (1) and the sliding piece (2) to the above mentioned pre-frame (6).

The above mentioned screw (3) is complemented by a bushing (8) fitted by a thread in the sliding piece (2), first passing through the frame (1).

The assembly of screw (3) and bush (8) will be placed to correspond with the hinges (9) on one of the upright

- 5 -                                    0149437

pieces of the frame (1) and freely with regard to the
other upright, this assembly providing a means of regu
lating the levelling and squariung of the door and sliding
frame. With regard to the pre-frame (6).

The screw (3) is formed by a stud with a head (10) of
greater breadth in which a blank hole has been provided,
suitable for the insertion of a tool which will be used
to turn the screw (3) either way.

The bush (8) consistutes a hollow body which receives
the head (10) of the screw (3), the head being locked
in such a way that the screw may rotate but not move
axially. The bush (8) presents its top widenèd (11)
in an essentially conical shape to limit its entry or:
penetration into the frame (1), continuing to its free
end in a flat area or section to end in a threaded
section (11) the width of which corresponds with the
thickness of the sliding piece (2), with the feature that
the pitch of the thread of that section (11) will be
the same as the pitch of the thread of the sud belonging
to the screw (3), all this in order to achieve a correct
and simultaneous advancement of both parts.

The screw and bush assembly is inserted after drilling
the frame, sliding piece and pre-frame, which will be
drilled simultaneously using a stepped drill of three
diameters. To thread it a tool with two diameters is
inserted, one larger which will fit in the orifice (12)
of the bush (8) and a smaller one which will fit in the blank hole (13) of the head (10) of the screw (3). In this way the bush (8) will screw into the sliding piece (2) and simultaneously the screw (3) will screw into the pre-frame (6). The bush (8) will penetrate until its widening (11) will come against the frame (1), at which moment superimposition will have been achieved of the aforementioned frame (1) and the sliding piece (2).

When this assembly has been made, the whole is ready to carry out the regulation between the frame-sliding piece and pre-frame, bringing them together or separating them until the correct plumb of the frame and leaf is achieved.

To make the adjustment, it will suffice to turn the screw (3) in either direction, with which the latter will go in or come out with regard to the pre(frame, bringing nearer or separating the frame from the pre-frame. The movement of approximation and/or separation occurs as a consequence of the head (10) of the screw (3) turning but not moving longitudinally inside the bush (8) as the head (10) is locked at the top and bottom.

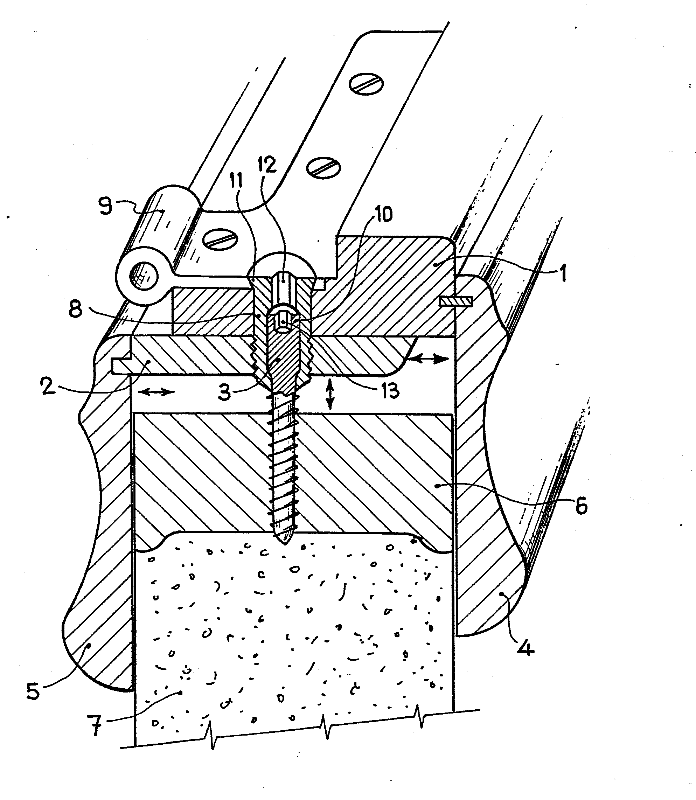

CLAIMS

1. Device for fixing door, window and similar frames, which having been designed for the direct installation of doors and/or windows on to the pre-frame placed on the masonry of the corresponding opening, and being constituted by the functional association of three fundamental pieces, one of which consitutes the frame itself, the other consti-tutes a sliding piece between the inner side of the aforementioned frame and the outer side of the pre-frame, whereas the third consists of a screw associated with a bush fitted by means of a thread in the sliding piece, being retained between the latter and the frame, in such a way that the screw passing through the bush screws into the pre-frame in order to effect the fixing of the frame, essentially characterized because the screw presents its flat section fitted in the bush, this flat section describing a widened head with its end provided with a blank hole for the insertion of a suitable tool which will be used to turn the ascrew both ways; with the particular feature that this widened head with its end provided with a blank hole for the insertion of a suitable tool which will be used to turn the screw both ways; with the parti cular feature that this widened head of the screw is housed in the bush and retained in it in order to rotate with regard to it, but not being able to move axially, it having been planned that the aforementioned bush presents a lower threaded section which screws into the sliding piece, the thread section of which is followed by a flat section which is housed in the frame, this flat section presenting widening in the form of a fru stum inverted towards its head end to prevent it coming out of the frame; in such a way that the said bush makes the frame and sliding piece solid, abutting them, while the rotation of the screw in both directions produces the approximation and/or separation of the block of the frame and sliding piece with regard to the pre-frame.

0149437